# EUROPEAN PATENT SPECIFICATION

(11) **EP 2 537 897 B1**
(45) Date of publication and mention of the grant of the patent: **28.06.2017**
(21) Application number: 12169612.4
(22) Date of filing: 25.05.2012
(51) Int. Cl.: C08L 63/00, C08F 2/20, C08J 3/12

(54) **Epoxy-based redispersible polymer powder**
Redispergierbares Polymerpulver auf Epoxybasis
Poudre polymère redispersable à base d'époxy

(30) Priority: 23.06.2011 US 201161500230 P
(43) Date of publication of application: 26.12.2012
(73) Proprietor: Dow Global Technologies LLC, Midland, MI 48674 (US)
(72) Inventor: Kuehn, Hartmut, 06116 Halle (DE); Perello, Margarita, CH- 8600 Dübendorf (CH); Michalski, Eva-Maria, D- 76547 Sinzheim (DE)
(74) Representative: Houghton, Mark Phillip

(56) References cited:
- EP-A1- 2 341 084
- EP-A1- 2 397 518
- EP-A2- 1 059 334
- WO-A2-02/28798
- JP-A- 2000 109 777
- US-A- 3 806 483
- US-A1- 2001 024 644

## Description

The present invention relates to a redispersible polymer powder comprising a polymer composition comprising a mixture of an epoxy resin and a vinyl ester polymer; a composition comprising an inorganic hydraulic binding agent and said redispersible polymer powder and; uses of said redispersible polymer powder, especially in a one-component hardener-free cement-containing dry mix.

Redispersible polymer powders have been employed for many years, in particular in the building sector, for modifying hydraulic systems such as cement-based adhesives and dry mixes in order to improve the strength properties. The advantages of using redispersible polymer powders instead of e.g. aqueous polymer dispersions are, inter alia, a high storage stability without addition of preservatives and the frost resistance of the pulverulent dry mixtures. Commercially available redispersible polymeric powders that have been used in e.g. cement-based tile adhesives and self-level flooring compounds include vinyl acetate/ethylene copolymers, various acrylic polymers, styrene/butadiene copolymers, and vinyl acetate/versatic acid vinyl ester copolymers. These types of polymers have a limited performance in use given the nature and type of chemistry. The possibility of adding an epoxy polymer as a redispersible powder would improve significantly the hydraulic stability and other mechanical and chemical properties of cement-based materials such as compression, abrasion resistance, chemical and solvent resistance.

Current systems for epoxy-modified cement in general consist of three components: a water-borne epoxy emulsion, water-borne hardeners and the cement-based material. All components have to be mixed in an efficient manner with the right ratios to ensure good performance of the finished product. This means a lot of handling with small quantities to avoid mistakes in the mixing ratios and the components can only be mixed on site because of the limitation in pot life. Although it would be desirable to have a redispersible epoxy-based polymer powder derived from liquid basis polymers it is difficult to prepare such a powder.

Despite using drying aids and anti-caking material the result of drying are often unredispersible lumps instead of a powder.

US-4,957,951 describes the preparation of a storage stable cement-containing dry premix wherein a dry premix (A) is prepared by first coating aggregate material with a liquid epoxy resin, then the resulting epoxy coated aggregate is coated with a pulverized aggregate powder thereby covering the epoxy coated aggregate; dry mix (B) is prepared by coating aggregate material with an epoxy resin hardener and then coating the resultant hardener coated aggregate with a pulverized aggregate powder; and finally premix (A) and premix (B) are mixed to form a building material. On the basis of said building material the manufacturer can prepare a ready-to-use building material mixture by adding cement and further ingredients. Although the use of said building material mixture at construction sites is quite easy and only implies the addition of water, the preparation of the building material itself, i.e. the preparation of dry premix (A) and (B) is very complicated and inefficient. The process does not imply the use of a redispersible epoxy-containing polymer powder but rather implies complex coating steps with epoxy resin and an additional epoxy resin hardener.

EP-A-1 170 341 is directed to an epoxy-containing coating composition which is a dry mixture of a pulverulent or granulated epoxy resin and an epoxy resin hardener and the dry mixture is redispersible or dissoluble in water. The mixture may contain hydraulic binding agents and can be used as screed or mortar. Although the dry mix is said to be redispersible or dissoluble no details are given with respect to the nature of the epoxy resin. It is not evident from EP-A-1 170 341 whether the epoxy resin as such is redispersible or dissoluble or whether only the dry mix containing the epoxy resin powder and additional components is redispersible or dissoluble. Although the coating composition of EP-A-1 170 341 is easy to use at the construction site it still requires exact dosing of epoxy resin and corresponding epoxy resin hardener, i.e. polyamine hardener, at the manufacturing site. Preparation of ready-to-use dry mix systems could be still simplified if the epoxy resin could be added to the mixture as one component without the necessity to add a separate hardener component requiring additional metering devices. A further drawback of the presence of an epoxy resin hardener component in the dry mix is a limited storage stability due to potential reaction during storage.

US-B-6,534,177 concerns crosslinkable polymer compositions which can be in the form of redispersible polymer powders und their use in products for the construction industry. The polymer composition is composed of A) a copolymer of one or more comonomers of vinyl esters of straight-chain or branched alkane carboxylic acids having 1 to 18 carbon atoms, acrylates or methacrylates of branched or straight-chain alcohols having 1 to 15 carbon atoms, dienes, olefins, vinylaromatics and vinyl halides, and of from 0.1 to 10 % by weight of one or more ethylenically unsaturated comonomers containing epoxide groups, and B) one or more non-copolymerizable compounds having at least two epoxide groups. US-B-6,534,177 requires the presence of epoxy comonomers in the copolymer which raises the price of the product and complicates the polymerization process.

US-A-2001/0197831 describes a redispersible crosslinkable polymer powder composition for use in products for the construction chemistry, comprising a polymer powder obtained by free radical polymerization of monomers selected from vinyl esters of straight-chain or branched alkylcarboxylic acids having 1 to 15 carbon atoms, methacrylates and acrylates of alcohols having 1 to 15 carbon atoms, vinylaromatics, olefins, dienes and vinyl halides, no epoxide-functional comonomers being copolymerized, and the subsequent drying of the polymer dispersion obtained thereby, wherein an epoxy resin is added before and/or during the polymerization and/or before the drying of the polymer dispersion. In order to obtain a pulverulent, crosslinking and redispersible polymer composition a pulverulent curing agent, preferably of the amine type, is mixed with the powder. Alternatively, a liquid curing agent is mixed into the water together with the redispersible polymer powder immediately before application. In all working examples the polymer is crosslinked by an amine curing agent; reference samples without curing agent completely failed.

Thus, the problem underlying the present invention is to provide an epoxy resin-containing polymer composition which can be used in the form of a redispersible polymer powder in storage stable (i.e. hardener-free) one-component dry mix construction materials without the necessity of adding a curing agent and which imparts favorable properties to the hardened material.

The present invention, in its various aspects, is as set out in the accompanying claims.

The object is solved by a redispersible polymer powder prepared from a polymer composition comprising:
(a) at least one epoxy resin;
(b) at least one vinyl ester polymer selected from
   (i) a vinyl ester homopolymer,
   (ii) vinyl ester copolymers comprising in polymerized form only vinyl ester monomers, and
   (iii) ethylene/vinyl ester copolymers comprising in polymerized form ethylene and vinyl ester monomer(s) and optional ethylenically unsaturated comonomers which are not vinyl esters; and
(c) at least one nonionic surfactant having a molecular weight within the range of from 1,000 to 7,000 Daltons which is different from an alkyl polyglycol ether or alkylaryl polyglycol ether having 8 to 40 ethylene oxide units.

The present invention is directed to a redispersible polymer powder comprising the polymer composition and a method for its preparation.

The present invention also concerns the use of the redispersible polymer powder in a construction application, more specifically its use in a one-component dry mix containing an inorganic hydraulic binding agent.

A further aspect of the present invention is a composition comprising an inorganic hydraulic binding agent and the redispersible polymer powder.

Component (a) of the present polymer composition is an epoxy resin. Within the meaning of the present invention an epoxy resin is a polyglycidyl ether of a polyhydroxy compound, such as a monomeric polyhydroxy compound e.g. a polyhydroxy hydrocarbon, or a hydroxyl-functional oligomer. Preferably, the polyglycidyl ether is an oligomeric or polymeric compound having at least 2 hydroxyl groups. Typically, the epoxy resin is the reaction product of a polyhydroxy compound, such as a monomeric polyhydroxy compound e.g. a polyhydroxy hydrocarbon, or a hydroxyl-functional oligomer, with an epihalohydrin, such as epichlorohydrin. The polyhydroxy hydrocarbon can be substituted, if desired, with one or more non-interfering substituents, such as halogen atoms, ether radicals, lower alkyls and the like. Examples of polyhydroxy hydrocarbons include polyhydric phenols and polyhydric alcohols. Specific nonlimiting examples of monomeric polyhydroxy compounds are resorcinol, catechol, hydroquinone, bisphenol, bisphenol A, bisphenol AP (1,1-bis(4-hydroxylphenyl)-1-phenyl ethane), bisphenol F, bisphenol K, tetrabromobisphenol A, tetramethylbiphenol, tetramethyl-tetrabromobiphenol, tetramethyltribromobiphenol, tetrachlorobisphenol A, 4,4'- sulfonyldiphenol, 4,4-oxydiphenol, 4,4'-dihydroxybenzophenone, 9,9'- bis(4-hydroxyphenyl)fluorine, 4,4'-dihydroxybiphenyl, and 4, 4'-dihydroxy-α-methylstilbene. Examples of hydroxyl-functional oligomers include phenol-formaldehyde novolak resins, alkyl substituted phenol-formaldehyde resins, phenol-hydroxybenzaldehyde resins, cresol-hydroxybenzaldehyde resins, dicyclopentadiene-phenol resins, and dicyclopentadiene-substituted phenol resins. The polyglycidyl ethers can be prepared by reacting an epihalohydrin, preferably epichlorohydrin, with the polyhydroxy compound including a halogenated polyhydroxy compound under such conditions to prepare the desired product. Such preparations are well known in the art (see for example US-A-5,118,729, columns 4-7 and "Epoxy resins" by Pham, H.Q. and Marks, M.J. in Ullmann's Encyclopedia of Industrial Chemistry, Wiley-VCH Verlag, Weinheim, 2005). Modified epoxy resins such as epoxy resins wherein part of the above mentioned fundamental reactants has been substituted by modified compounds are also encompassed by the term "epoxy resin". Oligomers and polymers obtained by free radical polymerization of monomer mixtures comprising ethylenically unsaturated epoxy compounds are not included by the definition of epoxy resin herein.

In one embodiment of the present invention the polyhydroxy compound used to prepare the epoxy resin is a polyhydroxy hydrocarbon, preferably an aromatic dihydroxy compound, such as bisphenol A and/or bisphenol F. In another embodiment an oligomeric or polymeric compound such as a phenol-formaldehyde novolac is used as polyhydroxy compound. Preferred examples of epoxy resins for use in the present invention include the diglycidyl ether of bisphenol A which is an oligomer of diglycidylether of bisphenol A, typically the reaction product of epichlorohydrin and bisphenol A; the diglycidyl ether of bisphenol F which is an oligomer of diglycidyl ether of bisphenol F, typically the reaction product of epichlorohydrin and bisphenol F; a mixed diglycidyl ether of bisphenol A and F, which is an oligomer of diglycidyl ether of bisphenol A and F, typically the reaction product of epichlorohydrin and a mixture of bisphenol A and F; the diglycidyl ether of a phenol-formaldehyde novolak which is an oligomer or polymer of diglycidyl ether of a phenol-formaldehyde novolak, typically the reaction product of epichlorohydrin and a phenol-formaldehyde novolak.

In a preferred embodiment the epoxide equivalent weight of the epoxy resin is within the range of from 170 to 800 g/eq, more preferably from 180 to 700 g/eq, and most preferably from 190 to 600 g/eq. The epoxy resins can be liquid which typically means an epoxide equivalent weight of less than 450 with preferred lower limits as defined before or solid or semi-solid which typically means a Mn of at least 450 with preferred upper limits as defined before. The epoxide equivalent weight is determined according to ASTM D 1652.

Typically, the epoxy resins for use in the present invention are characterized by a number average molecular weight Mₙ within the range of from 300 to 3,000, preferably from 320 to 2,500, more preferably from 350 to 2,200, and most preferably from 350 to 2,000 as determined by gel permeation chromatography according to ASTM D5296-05. The epoxy resins can be liquid which typically means a Mₙ of less than 1,000 with preferred lower limits as defined before or solid or semi-solid which typically means a Mₙ of at least 1,000 with preferred upper limits as defined before.

It is understood that the polymer composition according to the present invention may comprise a single epoxy polymer (a) or a mixture or blend of various epoxy polymers (a) as described above.

The vinyl ester polymer (b) for use in the present invention is selected from (i) a vinyl ester homopolymer, (ii) vinyl ester copolymers comprising in polymerized form only vinyl ester monomers, and (iii) ethylene/vinyl ester copolymers comprising in polymerized form ethylene and vinyl ester monomer(s) and optional ethylenically unsaturated comonomers which are not vinyl esters. In some embodiments the vinyl ester polymer (b) is free of epoxy groups(s). Typically, the vinyl ester is a vinyl ester of an aromatic carboxylic acid or a straight-chain or branched alkane carboxylic acid having 1 to 18 carbon atoms. Illustrative vinyl esters that may be employed include but are not limited to vinyl acetate, vinyl propionate, vinyl butyrate, vinyl benzoate, vinyl 2-ethylhexanoate, vinyl stearate and the vinyl ester of versatic acid. The preferred vinyl ester monomer is vinyl acetate; it may be used in combination with any of the other vinyl ester monomers or as the sole vinyl ester monomer. Accordingly, the vinyl ester polymer (b) for use in the present invention is preferably (i) a vinyl acetate homopolymer, (ii) a vinyl ester copolymer consisting of vinyl acetate and at least one other vinyl ester monomer, each in polymerized form, or (iii) an ethylene/vinyl ester copolymer comprising in polymerized form vinyl acetate and ethylene, optional further vinyl ester monomer(s) and optional ethylenically unsaturated comonomer(s) which are not vinyl esters. More preferably, the vinyl ester polymer (b) is (i) a vinyl acetate homopolymer or (iii) a ethylene/vinyl acetate copolymer comprising in polymerized form vinyl acetate as the sole vinyl ester monomer and ethylene and optional ethylenically unsaturated comonomer(s) which are not vinyl esters. Typically, the ethylene/vinyl ester copolymer, preferably the ethylene/vinyl acetate copolymer, comprises 0 to 25 % by weight of optional comonomers. Preferably, the ethylene/vinyl ester copolymer, preferably the ethylene/vinyl acetate copolymer, comprises in polymerized form 70 to 95 % by weight, more preferably 80 to 90 % by weight, and most preferably 82 to 87 % by weight of vinyl ester, preferably vinyl acetate; 5 to 30 % by weight, more preferably 10 to 20 % by weight, and most preferably 13 to 18 % by weight of ethylene; and 0 to 25 % by weight, more preferably 0 to 20 % by weight, even more preferably 0 to 10 % by weight and most preferably 0 % by weight of one or more optional comonomers, wherein all percentages are based on the total weight of the polymer. The ethylenically unsaturated comonomers that may optionally be copolymerized to form the ethylene/vinyl ester copolymer, preferably the ethylene/vinyl acetate copolymer, include but are not limited to alkyl vinyl ethers, typically C₁-C₈ alkyl vinyl ethers such as methyl vinyl ether, ethyl vinyl ether, isopropyl vinyl ether, n-propyl vinyl ether, tert-butyl vinyl ether, n-butyl vinyl ether, and isobutyl vinyl ether; amides and C₁-C₈ alkyl esters of unsaturated carboxylic acids, typically of acrylic acid and methacrylic acid such as methyl (meth)acrylate, ethyl (meth)acrylate, butyl (meth)acrylate, and 2-ethylhexyl (meth)acrylate esters of maleic acid such as diethyl ester, isopropyl ester, and 2-ethylhexyl ester; vinyl aromatic monomers such as styrene and substituted styrenes; vinyl halides such as vinyl chloride and conjugated dienes such as 1,3-butadiene. Preferably, the comonomers are not epoxy-functional monomers. It is understood that the optional comonomer(s) are contained in polymerized form. In an even more preferred embodiment the vinyl ester polymer (b) is (i) a vinyl acetate homopolymer or (iii) an ethylene/vinyl acetate copolymer not comprising any further comonomers.

Typically, the vinyl ester polymer (b) for use in the present invention has a glass transition temperature Tg of no more than 40°C, preferably no more than 20°C, more preferably no more than 10°C, and most preferably no more than 7°C. In some embodiments the vinyl ester polymer (b) has a glass transition temperature Tg of at least -30°C, preferably at least -15°C, more preferably at least -7°C, and most preferably at least 0°C. An exemplary preferred range for the Tg is from 0 to 10°C, e.g. about 6°C or 7°C. The glass transition temperature Tg of the dried polymer films is measured with a TA Instruments Q-100 Modulated Differential Scanning Calorimeter in the temperature range of -90°C to 100°C at a scan rate of 20°C/min. The Tg values reported are the mid-point values. These are temperature values in °C corresponding to the midpoint of the slope change in the energy (heat) flow - temperature plot.

The vinyl ester polymers (b) for use in the present invention can be prepared as it is well known to the person skilled in the art. Typically, they are prepared by emulsion polymerization and are thus obtained in the form of aqueous dispersions (polymer latices).

The emulsion polymerization process by which the vinyl ester polymer (b) may be prepared is generally conducted at a polymerization temperature from 40 to 90°C, preferably from 60 to 80°C. In the case of the copolymerization of gaseous comonomers such as ethylene the process may also be carried out at superatmospheric pressure, generally at from 5 to 100 bar.

The polymerization is initiated using water-soluble or monomer-soluble initiators or redox-initiator combinations, these being those commonly used for emulsion polymerization. Examples of water-soluble initiators are the sodium, potassium, and ammonium salts of peroxydisulfuric acid, hydrogen peroxide, tert-butyl peroxide, tert-butyl hydroperoxide, potassium peroxydiphosphate, tert-butyl peroxypivalate, cumene hydroperoxide, isopropylbenzene monohydroperoxide, and azobisisobutyronitrile. Examples of monomer-soluble initiators are dicetyl peroxydicarbonate, dicyclohexyl peroxydicarbonate, and dibenzoyl peroxide. The amount of the initiators generally used is from 0.01 to 0.5% by weight, based on the total weight of the monomers.

Redox initiators include combinations of the initiators previously mentioned with reducing agents. Suitable reducing agents are the sulfites and bisulfites of the alkali metals and of ammonium, for example sodium sulfite, the derivatives of sulfoxylic acid, for example zinc formaldehyde sulfoxylates or alkali metal formaldehyde sulfoxylates, an example being sodium hydroxymethanesulfinate, and ascorbic acid. The amount of reducing agent is preferably from 0.01 to 0.5 % by weight, based on the total weight of the monomers.

To control molecular weight, regulating substances may be used during the polymerization process. If regulators are used, the amounts usually used of these are generally from 0.01 to 5.0 % by weight, based on the weight of the monomers to be polymerized, and they may be fed separately and/or after premixing with components for the reaction. Examples of these substances are n-dodecyl mercaptan, tert-dodecyl mercaptan, mercaptopropionic acid, methyl mercaptopropionate, isopropanol, and acetaldehyde. It is preferable not to use any regulating substances.

The polymerization is typically conducted in the presence of a protective colloid such as polyvinyl alcohol. If used, the protective colloid, e.g. the polyvinyl alcohol, is typically added in an amount of up to 10 % by weight, preferably from 2 to 10 % by weight, based on the amount of monomer. It is believed that at least part of the protective colloid such as polyvinyl alcohol may react, i.e. may copolymerize with the vinyl ester monomers during polymerization. According to general practice in the art, those polymers which include copolymerized polyvinyl alcohol are still referred to as "vinyl ester polymers" rather than "vinyl ester/polyvinyl alcohol copolymers". Thus, the terms "vinyl ester polymer", "vinyl ester homopolymers", "vinyl ester copolymer", and "ethylene/vinyl ester copolymer" as used in the present application encompass the corresponding polymers as specified before and additionally comprising low amounts of copolymerized protective colloid such as polyvinyl alcohol. The polymerization process preferably takes place without addition of emulsifiers. In exceptional cases, it can also be advantageous to make additional use of small amounts of emulsifiers, where appropriate from 1 to 5 % by weight, based on the amount of monomer. Suitable emulsifiers include anionic, cationic, and non-ionic emulsifiers, for example anionic surfactants such as alkyl sulfates whose chain length is from 8 to 18 carbon atoms, or alkyl or alkyl aryl ether sulfates having from 8 to 18 carbon atoms in the hydrophobic radical and up to 40 ethylene or propylene oxide units, alkyl- or alkylarylsulfonates having from 8 to 18 carbon atoms, esters and half esters of sulfosuccinic acid with monohydric alcohols or with alkylphenols, or nonionic surfactants such as alkyl polyglycol ethers or alkylaryl polyglycol ethers having from 8 to 40 ethylene oxide units. All of the monomers may form an initial charge, or all of the monomers may form a feed, or portions of the monomers may form an initial charge and the remainder may form a feed after the polymerization has been initiated. The procedure is preferably that from 50 to 100 % by weight, based on the total weight of the monomers, form an initial charge and the remainder forms a feed. The feeds may be separate (spatially and chronologically), or all or some of the components to be fed may be fed after preemulsification.

Once the polymerization process has ended, post-polymerization may be carried out using known methods to remove residual monomer, one example of a suitable method being post-polymerization initiated by a redox catalyst. Volatile residual monomers may also be removed by distillation, preferably at subatmospheric pressure, and, where appropriate, by passing inert entraining gases, such as air, nitrogen, or water vapor, through or over the material. The protective colloid and the emulsifiers, such as the above anionic or nonionic surfactants, that may be used for emulsion polymerization of the vinyl ester polymer will be contained in the final polymer composition (in addition to the nonionic surfactant (c)). If it is referred to the amount or weight of vinyl ester polymer(s) (b) in the composition this includes the amount of optional protective colloid and optional emulsifiers/surfactants added during polymerization of the vinyl ester polymer.

It is understood that the polymer composition according to the present invention may comprise a single vinyl ester polymer (b) or a mixture or blend of various vinyl ester polymers (b) as described above.

The third mandatory component of the present polymer composition is a nonionic surfactant (c) having a molecular weight within the range of from 1,000 to 7,000 Daltons which is necessary to allow dispersion of the non self-dispersible epoxy resin (a) in an aqueous medium. The nonionic surfactant (c) is different from an alkyl polyglycol ether or alkylaryl polyglycol ether having 8 to 40 ethylene oxide units. The nonionic surfactant (c) useful in the present invention is characterized by having a molecular weight of not less than 1,000 Daltons and not more than abut 7,000 Daltons, and preferably not less than 1,200 Daltons and not more than 5,000 Daltons.

In preferred embodiments the nonionic surfactant (c) is a "low temperature" nonionic surfactant. By "low temperature" nonionic surfactant it is meant a surfactant that is operational at a temperature of from 40°C to 50°C, preferably from 20°C to 60°C, more preferably from 20°C to 65°C. Surfactants that are operational within a certain temperature range exhibit an interfacial tension of a drop of a solution of surfactant in a bifunctional bisphenol A based epoxy resin against water of less than 2 dynes/cm, preferably less than 1 dynes/cm within the specified temperature range, i.e. within a temperature range of from 40°C to 50°C, preferably from 20°C to 60°C, more preferably 20°C to 65°C. To determine the interfacial tension the surfactant is dissolved at a level of 0.5 % by weight in a bifunctional bisphenol A based epoxy resin (reaction product of epichlorohydrin and bisohenol A) having an epoxide equivalent weight of from 175 to 185 g/eq, such as D.E.R.^{™} 330^{™} liquid epoxy resin (epoxide equivalent weight of 176-185 g/eq, viscosity of 7,000 to 10,000 mPa·s, determined at 25°C according to ASTM D-445, density of 1.16 g/ml, determined at 25°C according to ASTM D-4052), available from The Dow Chemical Company, Midland, MI. The interfacial tension is measured with a fully automated drop volume tensiometer TVT 1 or 2 from LAUDA Dr. R. Wobser GmbH & Co. OHG, Lauda-Königshofen, Germany. The device is connected to a thermostat to ensure a constant temperature. Measurements at various temperatures within the range of interest are performed und the interfacial tension at each temperature is determined. At a temperature range from 20°C to 60°C the time for drop formation is set to 60 to 240 s and at a temperature range from 60°C to 90°C the time for drop formation is set to 10 to 50 s.

Exemplary preferred nonionic surfactants (c) are illustrated in the following structures: 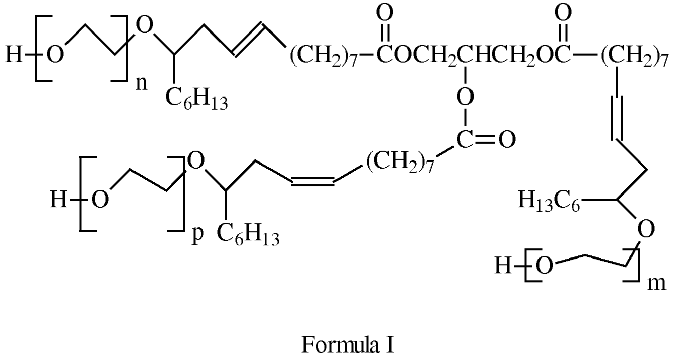 where the sum of n, m, and p in Formula (I) is such that the molecular weight of Formula I is not less than 1,000 Daltons, and more preferably not less than 2,000 Daltons; and not more than 7,000 Daltons, and more preferably not more than 5,000 Daltons. Commercially available Formula (I) nonionic surfactants (c) include Hydropalat 3037 nonionic surfactant (available from Henkel, n + m + p = 40), Emulgin PRT 100 nonionic surfactant (available from Henkel, n + m + p = 100), and Emulpon EL 42 nonionic surfactant (available from Witco, n + m + p = 42);

CH₃(CH₂)ₓO(CH₂CH₂O)_{y}- H Formula II

where x is from 10 to 18, and where y is from 30 to 50, more preferably from 35 to 45. A commercially available Formula (II) nonionic surfactant (c) is Disponil TA 430 nonionic surfactant (available from Cognis, x = C₁₁-C₁₇, y = 40); 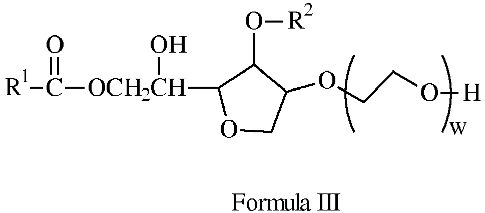 where R¹ is oleyl (9-octadecene-yl), and R² is either 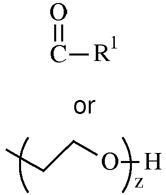 where the sum of w and z is not less than 10, and more preferably not less than 15; and not greater than 30, and more preferably not greater than 25. A commercially available Formula (III) nonionic surfactant is Sorbanox AO nonionic surfactant (available from Witco), which is a mixture of the Formula III structures. Other preferred nonionic surfactants (c) having a molecular weight of less than 7,000 Daltons and being useful in the present invention include for example Hydropalat 3037 (available from Cognis) and Disponil TA 430 (available from Cognis).

In one preferred embodiment the nonionic surfactant (c) employed in the present invention is an epoxy functional nonionic surfactant, preferably an epoxy modified polyethylene glycol, and more preferably a polyoxyethylene glycol modified epoxy resin. Such polyoxyethylene glycol modified epoxy resins may be exemplified by Formulae (IV) or (V):

A-X-O-(CH₂CH₂O)ₙ-R (IV)

or

A-X-O-(CH₂CH₂O)ₙ-X-A (V)

wherein A is the residue of a polyglycidyl ether of a polyhydroxy hydrocarbon and is the reaction product of an epihalohydrin with one or more polyhydroxyhydrocarbons or halogenated polyhydroxyhydrocarbons; or the reaction product of a polyglycidylether of a polyhydroxy hydrocarbon with one or more polyhydroxy hydrocarbons, halogenated polyhydroxyhydrocarbons, or a carboxyl substituted hydrocarbon or a mixture thereof;
X is the residue of a difunctional compound which is capable of reacting with the primary hydroxy moiety of a monoalkylether of a polyethylene glycol and a 1,2-glycidyl ether moiety;
R is a C₁₋₁₀ alkyl moiety; and
n is a positive real number such that the molecular weight is from 1000 to 7000 Daltons. Within Formula (V), A may be the same or different in each occurrence and X may be the same or different in each occurrence.

Polyoxyethylene glycol modified epoxy resins according to formula (IV) are in detail described in US-B-5,118,729. It is herewith referred to the complete disclosure of US-B-5,118,729. All explanations and definitions set forth in US-B-5,118,729 are equally applicable to the compounds of Formula (V).

It is understood that the polymer composition according to the present invention may comprise a single nonionic surfactant (c) or a mixture of various nonionic surfactants (c) as described above.

In some embodiments the polymer composition of the present invention may contain an anionic surfactant (e) and/or higher molecular weight nonionic surfactant (f) having a molecular weight of greater than 7,000 Daltons and not more than 20,000 Daltons in addition to the nonionic surfactant (c). These surfactants may further enhance the dispersion of the epoxy resin (a) in an aqueous medium.

When the nonionic surfactant (c) is used alone to disperse the epoxy resin, the preferred concentration of surfactant (c) is not less than 10 % by weight, more preferably not less than 14 % by weight, and most preferably not less than 16 % by weight; and preferably not greater than 25 % by weight, more preferably not greater than 20 % by weight, and most preferably not greater than 18 % by weight, based on the weight of the epoxy resin.

An optional component which may be used in the present invention comprises an anionic surfactant (e). Since the quantity of total nonionic surfactant required to prepare epoxy dispersions of satisfactory stability tends to be higher in the absence of a suitable anionic co-surfactant, a small amount of an anionic co-surfactant may be added along with the nonionic surfactant to minimize the total surfactant used in the dispersion. The anionic surfactant is selected such that the combination of the nonionic surfactant and the anionic surfactant reduces the interfacial tension of the epoxy resin as compared to the interfacial tension of the resin in the absence of the anionic surfactant. One method of determining the suitability of an anionic surfactant includes the step of: combining the anionic surfactant with a nonionic surfactant (c) in an epoxy resin at the temperature at which the nonionic surfactant (c) is effective (usually ambient temperature, about 25°C), and measuring the interfacial tension of the resin in the presence of the anionic surfactant and the nonionic surfactant (c), as compared to the interfacial tension of the resin in the presence of only the low temperature nonionic surfactant. One embodiment of the anionic surfactant useful in the present invention is one that shows, in combination with the nonionic surfactant (c), a decrease in interfacial tension of the epoxy resin as compared to the interfacial tension of the resin in the absence of the anionic surfactant. The most preferred anionic surfactant is one that shows a maximal decrease in interfacial tension of the epoxy resin for the nonionic surfactant (c).

Some examples of anionic surfactants useful in the present invention include sulfosuccinates, phospateesters and alkylethersulfates, and mixtures thereof.

It is understood that the polymer composition according to the present invention may comprise a single anionic surfactant (e) or a mixture of various anionic surfactants (e) as described above.

When the anionic surfactant is used with the nonionic surfactant (c), the preferred concentration of the anionic surfactant is not less than 0.5 % by weight, more preferably not less than 1 % by weight, and most preferably not less than 2 % by weight; and preferably not greater than 6 % by weight, more preferably not greater than 4 % by weight, and most preferably not greater than 3 % by weight, based on the weight of the epoxy resin and the nonionic surfactant (c).

Another optional component which may be used in the present invention comprises a higher molecular weight nonionic surfactant (f). The high higher molecular weight nonionic surfactant is characterized by having a molecular weight of greater than 7,000 Daltons and not more than 20,000 Daltons. In preferred embodiments the higher molecular weight nonionic surfactant (f) is a "high temperature" nonionic surfactant. By "high temperature" nonionic surfactant it is meant a surfactant that is operational at a temperature of from 75° to 85°C, preferably from 65°C to 95°C, more preferably from 60°C to 95°C. Surfactants that are operational within a certain temperature range exhibit an interfacial tension of a drop of a solution of surfactant in a bifunctional bisphenol A based epoxy resin against water of less than 2 dynes/cm, preferably less than 1 dynes/cm within the specified temperature range, i.e. within a temperature range of from 75° to 85°C, preferably from 65°C to 95°C, more preferably from 60°C to 95°C. The interfacial tension is determined as described above for the nonionic surfactant (c).

In one preferred embodiment, the higher molecular weight nonionic surfactant (f) has the following structure: 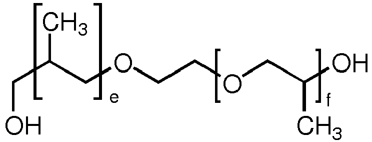 where each e is not less than 10, preferably not less than abut 15, most preferably not less than 20; and not greater than 50, more preferably not greater 40, and most preferably not greater 30; and f is not less than 100, more preferably not less than 200, and most preferably not less than 250; and preferably not greater than 500, more preferably not greater than 400, and most preferably not greater than 300. Examples of commercially available high temperature nonionic surfactants include Atsurf 108 surfactant (available from ICI) and Pluronic F108 surfactant (available from BASF Corp.), each with a molecular weight of about 14,000 (e=24; f=255).

Another example of a higher molecular weight nonionic surfactant (f) useful in the present invention is one which has the structure of the Formula (I) nonionic surfactant (c), wherein the sum of n, m, and p is such that the molecular weight is greater than 7,000 Daltons and less than 20,000 Daltons. An example of a commercially available higher molecular weight nonionic surfactant is Emulgin PRT 200 nonionic surfactant (available from Henkel). Other examples of suitable higher molecular weight nonionic surfactants (f) include ethoxylated mono-or dialkyl phenols such as polyethylene glycol nonyl or dinonyl phenyl ethers. An example of a commercially available ethoxylated dialkyl phenyl ether is Igepal DM 970 FLK PEG-i150 dinonyl phenyl ether (available from Rhone-Poulenc). Further preferred examples of higher molecular weight nonionic surfactants (f) for use in the present invention include compounds having a structure of Formulae (IV) or (V) nonionic surfactant (c), wherein n is a positive real number such that the molecular weight is from more than 7,000 to 20,000 Daltons.

The additional higher molecular weight nonionic surfactant (f) is especially useful in embodiments wherein the epoxy resin to be dispersed is in solid or semi-solid form, i.e. having a number average molecular weight of at least 1000.

It is understood that the polymer composition according to the present invention may comprise a single higher molecular weight nonionic surfactant (f) or a mixture of various higher molecular weight nonionic surfactants (f) as described above.

When the higher molecular weight nonionic surfactant (f) is used with the nonionic surfactant (c) and/or the anionic surfactant, the preferred concentration of the higher molecular weight nonionic surfactant (f) is not less than 4 % by weight, more preferably not less than 6 % by weight, and most preferably not less than 7 % by weight; and preferably not greater than 18 % by weight, more preferably not greater than 15 % by weight, and most preferably not greater than 13 % by weight, based on the weight of the epoxy resin, the nonionic surfactant (c) and the anionic (e) surfactant, if present.

In the present polymer composition the weight ratio ((a) + (c) + (e) + (f))/(b) which is the weight ratio of the total amount of epoxy resin(s) (a), nonionic surfactant(s) (c) and optional surfactants (e) and (f) to vinyl ester polymer(s) (b) is typically from 5:95 to 90:10, preferably from 5:95 to 70:30; more preferably from 10:90 to 50:50, and most preferably from 20:80 to 40:60. In one embodiment, the weight ratio of epoxy resin(s) (a) plus surfactant(s) (c), (e), and (f) to vinyl ester polymer(s) (b) is about 30:70.

The polymer composition of the present invention may optionally comprise (d) polyvinyl alcohol. The polyvinyl alcohol has been added during emulsion polymerization of the vinyl ester polymer (b) as described before and/or at a later stage to the composition already comprising epoxy resin (a) and vinyl ester polymer (b) as will be described below, e.g. as a drying aid. Preferred polyvinyl alcohols (d) have a degree of hydrolysis of 80 to 95 mole % and a Hoeppler viscosity of 1 to 30 mPa·s, measured as a 4 weight % aqueous solution at 20°C according to DIN 53015. The polyvinyl alcohols are optionally hydrophobically modified. The total amount of the polyvinyl alcohol(s) in the polymer composition is preferably from 2 to 30 % by weight, more preferably from 2 to 20 % by weight, and most preferably from 5 to 15 % by weight, based on the total weight of polymeric constituents and emulsifiers/surfactants.

In addition to epoxy resin(s) (a), vinyl ester polymer(s) (b), nonionic surfactant(s) (c), optional surfactants (e) and (f) and optional polyvinyl alcohol (d) the present polymer composition may comprise further components, such as organic solvents, plasticizers, film forming agents, additional polymers as well as impurities resulting from the polymerization processes, e.g. unreacted monomers, residual initiators, biocides and defoaming agents. Illustrative examples of additional polymers, which are different from polymers (a), (b) and (d), include polymers and copolymers of monomers selected from vinyl esters of optionally branched C₁ to C₁₈ alkane carboxylic acids, (meth)acrylate ester of optionally branched C₁ to C₁₅ alcohols, dienes, olefins, vinyl aromatics and vinyl halides. Preferably, the present polymer composition is free of any oligomers and/or polymers obtained by free radical polymerization of monomer mixtures comprising ethylenically unsaturated epoxy compounds. Typically, the combined weight of epoxy resin(s) (a), nonionic surfactant(s) (c) and optional surfactants (e) and (f) and vinyl ester polymer(s) (b) constitutes at least 50 % by weight, preferably more than 70 % by weight, more preferably more than 75 % by weight, even more preferably more than 80 % by weight, and most preferably more than 85 % by weight of the dry weight of the polymer composition.

Surprisingly, it has been found out that a powder based on the present polymer composition can be prepared which has a good flowability and is readily dispersible in water. Thus, the present invention is directed to a redispersible polymer powder comprising the polymer composition as described above including preferred embodiments of the polymer composition. The redispersible polymer powder can be obtained by drying an aqueous dispersion comprising the present polymer composition.

Typically, the aqueous dispersion of the present invention is prepared by combining and mixing an aqueous dispersion of epoxy resin(s) (a) comprising the nonionic surfactant(s) (c) and optional surfactants (e) and (f) and an aqueous dispersion of vinyl ester polymer(s) (b) and adding any further optional components either to one or both of the aqueous dispersions of (a) and (b) prior to their combination or to the combined aqueous dispersion afterwards. Whereas an aqueous dispersion of a vinyl ester polymer is conveniently obtained as the direct product of emulsion polymerization as described above, an epoxy resin does generally not come up as an aqueous dispersion from its manufacture. It is rather necessary to convert the usually liquid or semi-solid or solid epoxy resin into an aqueous dispersion by well-known means such as mechanical dispersion. The nonionic surfactant (c), optionally in combination with further surfactant(s) (e) and/or (f), is needed to prepare the epoxy resin dispersion. Typically, the epoxy resin dispersion is prepared by contacting a composition containing the epoxy resin and the nonionic surfactant (c) and further optional surfactant(s) with water, such as for example described in US-B-5,118,729. Suitable methods for preparing stable aqueous epoxy resin dispersions are described in US-A-2010/0174016, especially in paragraphs [0066] - [0069]. Methods of mechanical dispersion that can be applied are also disclosed in, for example, US-A-3,360,599; US-A-3,503917; US-A-4,123,403; US-A-5,037,864; and US-A-5,539,021. Aqueous dispersions of epoxy resins comprising a nonionic surfactant (c) that can be employed in the present invention are also commercially available. Illustrative examples include XZ 92598.00, XZ 92533.00, which are both used in the examples below, and XZ 92546.00, which is an emulsion of a modified semi-solid epoxy novolac resin (reaction product of epichlorohydrin and phenol-formaldehyde novolac) in water comprising comprising XZ 92576.00, a low temperature nonionic epoxy functional surfactant having a molecular weight of about 3,400 Daltons; all products are available from The Dow Chemical Company, Midland, Michigan, U.S.A. The solids content of both the epoxy resin dispersion and the vinyl ester polymer dispersion is typically from 45 to 70 % by weight.

The redispersible polymer powder of the present invention is prepared from an aqueous dispersion comprising epoxy resin(s) (a), vinyl ester polymer(s) (b), nonionic surfactant(s) (c) and optional components. The solids content of said aqueous dispersion is generally from 30 to 75 % by weight. To prepare the redispersible polymer powder the aqueous dispersion is dried, for example by spray drying, freeze drying or fluidized-bed drying. Preferably, the aqueous dispersion is spray dried. Spray drying is typically performed after addition of one or more protective colloids as a spraying aid to the dispersion, preferably in the form of an aqueous solution. Addition can proceed in any manner as long as a homogenous dispersion mixture is obtained. The amount of protective colloid(s) added here is generally from 2 to 20 % by weight, based on the total weight of polymeric constituents and emulsifiers/surfactants. A preferred protective colloid is polyvinyl alcohol (d) described above. Further additives such as surfactants and defoamers may be employed, if desired, and said further additives are preferably added to the aqueous dispersion before drying.

The spray drying can take place in conventional spray drying systems, for example a dispersion may be atomized by using single, twin or multifluid nozzles or a rotating disk in a stream of drying gas which may be heated. In general, air, nitrogen or nitrogen enriched air is employed as the drying gas, the drying gas temperature typically not exceeding 250°C. The drying temperature preferably is from 120 to 180°C, more preferably from 150 to 170°C. The product outlet temperature preferably is from 30 to 80°C.

An anticaking agent (antiblocking agent) may be added to the polymer powder, typically to increase storage stability, for example in order to prevent caking and blocking and/or to improve the flow properties of the powder. This addition is preferably carried out as long as the powder is still finely dispersed, for example still suspended in the drying gas. Typically, the anticaking agent is continuously added during the drying step The anticaking agent is preferably of mineral origin. It is preferably added in an amount of up to 30 % by weight, based on the total weight of polymeric constituents. Examples of anticaking agents include but are not limited to kaolin, calcium carbonate, magnesium carbonate, talc, gypsum, silica and silicates, the particle sizes of the anticaking agents are preferably in the range of from 1 to 10 µm with an X50 value of about 3 µm. A preferred anticaking agent is kaolin.

In a preferred embodiment of the present invention the redispersible polymer powder comprises a protective colloid such as polyvinyl alcohol or an anticaking agent, more preferably it comprises both. It is understood that more than one protective colloid and more than one anticaking agent may be used.

The redispersible polymer powder of the present invention can easily be redispersed in water and unexpectedly, it has turned out that the application performance of the epoxy resin has not been worsened within the redispersible powder. Obviously, the reactivity of the epoxy resin is not influenced negatively by the high temperatures during the drying process. It has further been found out that curing of the epoxy resin can occur in an alkaline environment at ambient temperatures without an additional hardener. Preferably, the pH value is at least 10, more preferably at least 11. The easy redispersibility of the polymer powder and the ability of the epoxy resin to harden under alkaline conditions without the necessity to add an epoxy resin hardener makes the polymer powder ideal as an additive to a variety of building materials, such as construction chemistry products, especially for dry-mix applications. Early strength is built up since this will be developed through an epoxy crosslinking mechanism rather than through a film forming after particle coalescing that takes always much longer. Thus, the final hardened, typically cement- or gypsum-based, composite will have improved mechanical and chemical properties, such as initial strength and strength after water immersion, compression, abrasion resistance, chemical and solvent resistance. The building materials generally comprise an inorganic hydraulic binding agent. Thus, the present invention is also directed to a composition, such as a construction chemistry product, comprising an inorganic hydraulic binding agent and the redispersible powder as described above. Typically, the inorganic hydraulic binding agent is cement or calcium sulfate hemihydrate (plaster of Paris), preferably cement. Examples of suitable cements include Portland cement, alumina cement, pozzolanic cement, slag cement, magnesia cement and phosphate cement. The redispersible powder is also useful in other applications providing an alkaline environment but being free of a hydraulic binding agent.

As the epoxy resin in the redispersible polymer powder is able to cure without the addition of an epoxy resin curing agent such as an amine curing agent, the construction chemistry product comprising an inorganic hydraulic binding agent and the redispersible powder is preferably free of amine curing agent, preferably it is free of any curing agent for the epoxy resin.

The possibility to add an epoxy resin to a building material in the form of the present redispersible polymer powder allows to have one-component dry mixes (ready-to-use dry mixes). The redispersible polymer powder can already be premixed with the hydraulic binding agent and additional optional components such, as for example, sand to produce a one-component system for the end user.

At the construction site only water has to be added and no annoying dosing of other ingredients is necessary. Typically, the composition comprising an inorganic hydraulic binding agent and the redispersible powder results in a pH of at least 10, preferably at least 11 after addition of water. The alkaline environment then causes curing of the epoxy resin contained in the composition.

The hardener-free compositions of the present invention exhibit superior storage stability as no hardener that may already react undesirably during storage is present.

Typical building materials wherein the redispersible polymer powder of the present invention may be used are one-component dry mixes (ready-to-use pulverulent construction chemistry products) containing an inorganic hydraulic binding agent, preferably one-component hardener-free dry mixes, more preferably one-component hardener-free cement-containing dry mixes. More specific illustrative examples of building materials wherein the redispersible polymer powder can be used include mortars, tile or board adhesives, gypsum or cement plasters or renders, decorative renders, self-leveling flooring compositions, one-component sealants and exterior insulation finishing systems. The redispersible polymer powder of the present invention may be used in a construction chemistry product, preferably a dry mix product, as described above in a corresponding construction application. The use in the construction application such as within a dry mix product preferably excludes the addition of an amine curing agent, more preferably it excludes the addition of any curing agent for the epoxy resin. In addition to applications in the building sector, the redispersible powder can also be used in other applications involving a hydraulic binding agent such as cementitious compositions for oil drilling applications. The corresponding hardened building materials obtained from materials comprising the redispersible polymer powder of the present invention exhibit good adhesion strength also after immersion in water (water resistance).

It should be understood that the intent of this description is not to limit the invention to the particular embodiments described. Use of the terms "comprising", "comprises" and variations thereof are intended to be open-ended. Thus, elements, steps or features not expressly listed or described are not excluded.

The following examples are provided for illustrative purposes only and are not intended to limit the scope of the claims that follow.

### EXAMPLES

All percentages and parts given in the examples are based on weight unless otherwise indicated.

### Used materials

### Epoxy resin dispersions

XZ 92598.00 is an experimental liquid epoxy resin emulsion available from The Dow Chemical Company, Midland, Michigan, U.S.A. XZ 92598.00 is a modified, liquid bisphenol A based epoxy resin emulsified in water. XZ 92598.00 comprises D.E.R.^{™} 331^{™} liquid epoxy resin (also available from The Dow Chemical Company, Midland, Michigan, U.S.A.) comprising XZ 92576.00, a low temperature nonionic epoxy functional surfactant having a molecular weight of about 3,400 Daltons. The epoxy resin emulsion has a solids content of 63 - 65 % by weight and an epoxide equivalent weight (on solids) of 193 - 204 g/eq.

XZ 92533.00 is an experimental solid epoxy resin emulsion available from The Dow Chemical Company, Midland, Michigan, U.S.A. XZ 92533.00 is a modified, solid bisphenol A based epoxy resin emulsified in water. XZ 92533.00 comprises a bisphenol A based epoxy resin modified with polypropylene glycol epoxide and comprising a low temperature nonionic epoxy functional surfactant having a molecular weight of about 1,660 Daltons, in combination with a high temperature nonionic epoxy functional surfactant having a molecular weight of about 8,865 Daltons. The epoxy resin emulsion has a solids content of 46 - 48 % by weight and an epoxide equivalent weight (on solids) of 475 - 500 g/eq.

### Vinyl ester polymer dispersions

"VA polymer dispersion" is an aqueous dispersion of vinyl acetate homopolymer containing about 7 % by weight of polyvinyl alcohol, the percentage being based on vinyl acetate homopolymer. The solids content of the dispersion is about 50 % by weight. The vinyl acetate homopolymer has a glass transition temperature of about 38°C and a minimum film forming temperature of about 18°C.

"EVA copolymer dispersion" is an aqueous dispersion of vinyl acetate/ethylene copolymer (84 % by weight of vinyl acetate units and 16 % by weight of ethylene units) containing about 5 % by weight of polyvinyl alcohol, the weight percentage of polyvinyl alcohol being based on EVA copolymer. The solids content of the dispersion is about 50 % by weight. The EVA copolymer has a minimum film forming temperature of about 0°C and a glass transition temperature of about 6°C.

The aqueous polymer dispersions comprising VA polymer or EVA copolymer were prepared by a conventional emulsion polymerization process as generally described before.

### Polyvinyl alcohol

The polyvinyl alcohol has a degree of hydrolysis of 88 mole % and a Hoeppler viscosity of 4 mPa·s, measured as a 4 weight % aqueous solution at 20°C according to DIN 53015.

### Preparation of redispersible powders

The redispersible powders A, B, C, and D according to the present invention were prepared as follows: The vinyl ester polymer dispersion was first mixed with an aqueous solution of polyvinyl alcohol and then the epoxy resin dispersion was added under stirring. The vinyl ester polymer dispersion and the epoxy resin dispersion were combined in amounts to result in a weight ratio of vinyl ester polymer (including 7 or 5 % by weight of polyvinyl alcohol, respectively, contained in the vinyl ester polymer dispersions) to epoxy resin (including surfactants) of about 70:30 (powders A, B, and C) or 80:20 (powder D), each based on solids. The polyvinyl alcohol was added in an amount of about 10 % by weight based on the total solids weight of vinyl ester polymer and epoxy resin. Next, the viscosity of the combined dispersion was lowered by adding water to reach a final solids content of 40 to 45 %. This dispersion was spray dried in a Niro atomizer (inlet temperature: ca. 130°C; outlet temperature: ca. 50°C; residual moisture of the powder: ca. 0.9 %). During the drying process kaolin (10 % by weight based on total solids weight of vinyl ester polymer and epoxy resin) was continuously dosed into the dryer as an anticaking agent. The obtained powders were free flowing and had a stable consistency.

The following vinyl ester polymer/epoxy resin combinations were used for redispersible powders A, B, C and D:

| | |
|---|---|
| powder A: | VA polymer / XZ 92598.00 (70/30) |
| powder B: | VA polymer / XZ 92598.00 (80/20) |
| powder C: | EVA copolymer / XZ 92598.00 (70/30) |
| powder D: | EVA copolymer / XZ 92533.00 (70/30) |

All powders showed a good redispersibility in water.

Comparative powders E and F were also prepared according to the above procedure with the exception that the polyurethane dispersions indicated in the Table were used instead of the epoxy resin dispersion. The weight ratio of vinyl ester polymer to polyurethane was about 70:30 based on solids for both powders.

Five different cement-based tile adhesive compositions were prepared by dry blending the solid components indicated in the Table and then adding water. Various properties of the tile adhesives being essential for their performance were tested and the results are also shown in the Table.

### Test methods

Initial strength and strength after water immersion were measured according to European standard EN 1348. The tile adhesive was applied onto concrete slabs and non absorbent ceramic tiles (Winckelmann, 50 to 50 mm) were stocked onto the tile adhesive to measure the pull of strength after being stored under different conditions: initial strength (28 d), strength after water immersion (7 d standard climate + 21 days water immersion).

Workability: Workability was evaluated subjectively and rated on a scale from 1 (very poor) to 5 (very good).

Viscosity: The viscosities were obtained at a temperature of 23°C with a Brookfield viscometer in combination with a Brookfield Helipath stand. After a maturing time of 13 min the tile adhesive was filled into a cup and the spindle (F-T) of the viscometer rotates for 2 minutes with 0.5 rpm, for another 2 minutes with 5 rpm and another 2 minutes with 50 rpm. During the 5 rpm and 50 rpm rotation the viscometer was moved up and down so that its rotating spindle described a helical path through the sample. The dynamic viscosities at 0.5 rpm, 5 rpm and 50 rpm are given in the Table.

**TABLE: Compositions and properties of cement-based tile adhesives**

| | | Ex. 1 | Ex. 2 | Ex. 3 | Ex. 5* | Ex. 4* |
|---|---|---|---|---|---|---|
| COMPOSITION | | | | | | |
| Cement¹ | parts | 40.0 | 40.0 | 40.0 | 40.0 | 40.0 |
| Quartz sand² | parts | 60.0 | 60.0 | 60.0 | 60.0 | 60.0 |
| Cellulose ether³ | parts | 0.4 | 0.4 | 0.4 | 0.4 | 0.4 |
| Redispersible Powders | | | | | | |
| A (VA / XZ 92598) | parts | 2.0 | | | | |
| C (EVA / XZ 92598) | parts | | 2.0 | | | |
| D (EVA / XZ 92533) | parts | | | 2.0 | | |
| E* (EVA / YM 2100 ⁴) | parts | | | | 2.0 | |
| F* (EVA / YS 3200 ⁵) | parts | | | | | 2.0 |
| Total | parts | | | | | |
| Water | parts | 102.4 | 102.4 | 102.4 | 102.4 | 102.4 |
| | | | | | | |
| PROPERTIES | | | | | | |
| Initial strength | N/mm² | 1.69 | 1.69 | 1.13 | 1.04 | 0.98 |
| Strength after water immersion | N/mm² | 1.39 | 1.45 | 1.12 | 1.04 | 0.95 |
| Density | kg/l | 1.57 | 1.58 | 1.53 | 1.54 | 1.53 |
| Workability | Rating | 5 | 4 - 5 | 5 | 5 | 5 |
| Viscosity η at 0.5 rpm | Pa·s | 2714 | 2829 | 2637 | 3666 | 4082 |
| Viscosity η at 5 rpm | Pa·s | 431 | 454 | 403 | 546 | 586 |
| Viscosity η at 50 rpm | Pa·s | 89 | 77 | 80 | 98 | 102 |

| | | | | | | |
|---|---|---|---|---|---|---|
| * Comparative example ¹ Portland cement CEM I 42.5 ² Quartz sand 0.1 - 0.4 mm ³ Hydroxypropyl methyl cellulose (Methocel 10-0148, available from The Dow Chemical Company, Midland, USA) ⁴ Aromatic/polyether-based polyurethane dispersion (SYNTEGRA^{™} YM 2100, available from The Dow Chemical Company, Midland, USA), solids content of 50 - 55 % ⁵ MDI-based (methyl diphenyl isocyanate) polyurethane dispersion (SYNTEGRA^{™} YS 3200, available from The Dow Chemical Company, Midland, USA), solids content of 42 - 45 % | | | | | | |

It is evident from the Table that each of the cement-based tile adhesives according to the present invention (Examples 1, 2 and 3) showed improved adhesion strength and water resistance.

## Claims

1. A redispersible polymer powder composition comprising:
(a) at least one epoxy resin;
(b) at least one vinyl ester polymer selected from
(i) a vinyl ester homopolymer,
(ii) vinyl ester copolymers comprising in polymerized form only vinyl ester monomers, and
(iii) ethylene/vinyl ester copolymers comprising in polymerized form ethylene and vinyl ester monomer(s) and optional ethylenically unsaturated comonomers which are not vinyl esters; and
(c) at least one nonionic surfactant having a molecular weight within the range of from 1,000 to 7,000 Daltons which is different from an alkyl polyglycol ether or alkylaryl polyglycol ether having 8 to 40 ethylene oxide units.

2. The composition according to claim 1 wherein the vinyl ester polymer (b) is free of epoxy group(s).

3. The composition according to claim 1 which is free of an amine curing agent for the epoxy resin.

4. The composition according to claim 1 further comprising an anionic surfactant (e) and/or a higher molecular nonionic surfactant (f) having a molecular weight of greater than 7,000 Daltons and not more than 20,000 Daltons.

5. The composition according to claim 1, wherein the weight ratio of the total amount of epoxy resin(s) (a), nonionic surfactant(s) (c) to vinyl ester polymer(s) (b) is from 5:95 to 90:10.

6. The composition according to claim 1, wherein the ethylene/vinyl ester copolymer (b)(ii) comprises in polymerized form 70 to 95 % by weight of vinyl acetate; and 5 to 30 % by weight of ethylene.

7. A method for preparing a redispersible polymer powder as claimed in claim 1 comprising providing a dispersion of the epoxy resin (a) comprising the nonionic surfactant (c) and a dispersion of vinyl acetate polymer (b) and mixing the dispersions, followed by drying the aqueous dispersion.

8. A composition comprising the redispersible polymer powder according to claim 1 and an inorganic hydraulic binding agent such as cement or calcium sulfate hemihydrate.

9. The composition according to claim 8 which is free of an amine curing agent, preferably free of any curing agent for the epoxy resin.

10. The composition according to claim 8 which is a mortar, a tile or board adhesive, a gypsum or cement plaster or render, a decorative render, a self-leveling flooring composition, or a grout.

## Patentansprüche

1. Eine redispergierbare Polymerpulverzusammensetzung, beinhaltend:
(a) mindestens ein Epoxidharz;
(b) mindestens ein Vinylesterpolymer, ausgewählt aus Folgendem:
(i) einem Vinylesterhomopolymer,
(ii) Vinylestercopolymeren, beinhaltend in polymerisierter Form lediglich Vinylestermonomere, und
(iii) Ethylen/Vinylestercopolymeren, beinhaltend in polymerisierter Form Ethylen- und Vinylestermonomer(e) und optional ethylenisch ungesättigte Comonomere, die nicht Vinylester sind; und
(c) mindestens ein nichtionisches Tensid mit einem Molekulargewicht im Bereich von 1 000 bis 7 000 Dalton, das sich von einem Alkylpolyglykolether oder Alkylarylpolyglykolether mit 8 bis 40 Ethylenoxideinheiten unterscheidet.

2. Zusammensetzung gemäß Anspruch 1, wobei das Vinylesterpolymer (b) frei von (einer) Epoxidgruppe(n) ist.

3. Zusammensetzung gemäß Anspruch 1, die frei von einem Aminaushärtungsmittel für das Epoxidharz ist.

4. Zusammensetzung gemäß Anspruch 1, ferner beinhaltend ein anionisches Tensid (e) und/oder ein höhermolekulares nichtionisches Tensid (f) mit einem Molekulargewicht von mehr als 7 000 Dalton und nicht mehr als 20 000 Dalton.

5. Zusammensetzung gemäß Anspruch 1, wobei das Gewichtsverhältnis der Gesamtmenge an Epoxidharz(en) (a), nichtionischem/nichtionischen Tensid(en) (c) zu Vinylesterpolymer(en) (b) 5 : 95 bis 90 : 10 beträgt.

6. Zusammensetzung gemäß Anspruch 1, wobei das Ethylen-/Vinylestercopolymer (b)(ii) in polymerisierter Form zu 70 bis 95 Gew.-% Vinylacetat und zu 5 bis 30 Gew.-% Ethylen beinhaltet.

7. Ein Verfahren zum Zubereiten eines redispergierbaren Polymerpulvers gemäß Anspruch 1, beinhaltend das Bereitstellen einer Dispersion des Epoxidharzes (a), beinhaltend das nichtionische Tensid (c), und einer Dispersion von Vinylacetatpolymer (b) und Mischen der Dispersionen, gefolgt von dem Trocknen der wässrigen Dispersion.

8. Eine Zusammensetzung, beinhaltend das redispergierbare Polymerpulver gemäß Anspruch 1 und ein anorganisches hydraulisches Bindemittel wie etwa Zement oder Calciumsulfat-Halbhydrat.

9. Zusammensetzung gemäß Anspruch 8, die frei von einem Aminaushärtungsmittel, vorzugsweise frei von einem beliebigen Aushärtungsmittel für das Epoxidharz ist.

10. Zusammensetzung gemäß Anspruch 8, die ein Mörtel, ein Fliesen- oder Plattenkleber, ein Gips- oder Zementinnenputz oder -außenputz, ein dekorativer Außenputz, eine selbstnivellierende Bodenzusammensetzung oder eine Fugenmischung ist.

## Revendications

1. Une composition de poudre de polymère redispersable comprenant :
(a) au moins une résine époxy ;
(b) au moins un polymère d'ester de vinyle sélectionné parmi
(i) un homopolymère d'ester de vinyle,
(ii) des copolymères d'ester de vinyle comprenant sous forme polymérisée uniquement des monomères d'ester de vinyle, et
(iii) des copolymères d'éthylène/ester de vinyle comprenant sous forme polymérisée un ou des monomères d'éthylène et d'ester de vinyle et des comonomères éthyléniquement insaturés facultatifs qui ne sont pas des esters de vinyle ; et
(c) au moins un tensioactif non ionique ayant une masse moléculaire comprise dans l'intervalle allant de 1 000 à 7 000 Daltons, lequel est différent d'un éther d'alkyl polyglycol ou éther d'alkylaryl polyglycol ayant 8 à 40 unités d'oxyde d'éthylène.

2. La composition selon la revendication 1 dans laquelle le polymère d'ester de vinyle (b) est exempt de groupe(s) époxy.

3. La composition selon la revendication 1, laquelle est exempte d'un agent de durcissement amine pour la résine époxy.

4. La composition selon la revendication 1 comprenant en sus un tensioactif anionique (e) et/ou un tensioactif non ionique de masse moléculaire plus élevée (f) ayant une masse moléculaire supérieure à 7 000 Daltons et ne dépassant pas 20 000 Daltons.

5. La composition selon la revendication 1, dans laquelle le rapport en poids de la quantité totale de résine(s) époxy (a), de tensioactif(s) non ionique(s) (c) au(x) polymère(s) d'ester de vinyle (b) va de 5/95 à 90/10.

6. La composition selon la revendication 1, dans laquelle le copolymère d'éthylène/ester de vinyle (b)(ii) comprend sous forme polymérisée 70 à 95 % en poids d'acétate de vinyle ; et 5 à 30 % en poids d'éthylène.

7. Une méthode pour préparer une poudre de polymère redispersable telle que revendiquée dans la revendication 1 comprenant le fait de fournir une dispersion de la résine époxy (a) comprenant le tensioactif non ionique (c) et une dispersion du polymère d'acétate de vinyle (b) et le fait de mélanger les dispersions, puis de faire sécher la dispersion aqueuse.

8. Une composition comprenant la poudre de polymère redispersable selon la revendication 1 et un agent de liaison hydraulique inorganique tel que du ciment ou du sulfate de calcium hémihydrate.

9. La composition selon la revendication 8, laquelle est exempte d'un agent de durcissement amine, préférablement exempte de tout agent de durcissement pour la résine époxy.

10. La composition selon la revendication 8, laquelle est un mortier, une colle pour carrelage ou planche, un plâtre ou enduit au gypse ou au ciment, un enduit décoratif, une composition de revêtement de sol autonivelant, ou un coulis.
